# EUROPEAN PATENT APPLICATION

(11) **EP 4 653 922 A1**
(43) Date of publication of application: **26.11.2025**
(21) Application number: 25178497.1
(22) Date of filing: 23.05.2025
(51) Int. Cl.: G01T 1/29

(54) **APPARATUS FOR DETECTING THE POSITION OF A HIGH-INTENSITY IONISING BEAM**

(30) Priority: 24.05.2024 IT 202400011854
(71) Applicant: SenSiC GmbH, 5234 Villigen (CH)
(72) Inventor: Camarda, Massimo, 95126 Catania (IT)
(74) Representative: Perani & Partners S.p.A.

(57) **Abstract**

Detecting apparatus (1) for detecting the position of a high-intensity ionizing beam (A) emitted along a beam propagation direction (X-X), comprising a first plate-shaped sensor (2) and at least a second plate-shaped sensor (3), both comprising a respective plate (8) of semiconductor material extending between respective first ends (2a, 3a) and second ends (2b, 3b) along a first direction (D1-D1) transverse to the beam propagation direction (X-X). The second end (2b, 3b) of each plate-shaped sensor being configured to partially intercept a high-intensity ionizing beam portion (A) and detect, through photoelectric effect internal to the plate (8) and built-in electric potential active in the plate (8), the intensity and energy of the respective portion of the ionizing beam (A). The second plate-shaped sensor (3) is arranged along the first direction (D1-D1) opposite to the first plate-shaped sensor (2) with respect to the high-intensity ionizing beam (A), the two plate-shaped sensors (2, 3) being movable along the first direction (D1-D1).

## Description

### Technical Field

The present invention relates to a detecting apparatus adapted to detect the position of a high-intensity ionizing beam, and to a system comprising such detecting apparatus. The detecting apparatus and system of the present invention find particular application in the measurement and detection of high-intensity beams of ions, subatomic particles, including neutrons, protons or positrons, X-rays or gamma rays.

### Description of the prior art

In the state of the art it is known to make a detector comprising a plate-shaped device of semiconductor material, for example of silicon carbide or diamond, adapted to measure the properties of a high-intensity ionizing beam by measuring the number of charge carriers released inside the material, through the internal photoelectric effect, by the ionizing beam itself. The known detectors allow to measure a charge pulse or a constant current in the plate-shaped device by means of metal plates deposited on the two sides of the semiconductor, adapted to collect the generated charges, and connected to a measurement circuit. As is known, the intensity of the incident radiation, i.e. of the high-intensity ionizing beam, is directly determinable on the basis of the number of electron-hole pairs measured.

The aforementioned known detectors can also permit to measure, in addition to the intensity of the high-intensity ionizing beam, also its centre of mass or energy distribution.

In particular, it is known in the art to use the detectors described above to detect the position of the high-intensity ionizing beam and identify any displacements of the aforementioned ionizing beam. Based on the displacements and position of the high-intensity ionizing beam, it is possible to provide a more accurate and precise use for the respective applications.

An example of a detecting device is shown by document JPH08297166A, wherein a diamond plate is coupled to a plurality of metal plates, partially superimposed on the diamond plate itself. The aforementioned diamond plate has a central hole adapted to allow the passage of the high-intensity ionizing beam, thus eliminating any interferences with the central part of the beam and allowing the partial or total absorption of peripheral portions, i.e. the tails, of the beam.

A further example of a known detector is shown by document EP3719542 A1, in which a single silicon carbide (SiC) plate is coupled to a plurality of metal plates, i.e. electrodes, superimposed with part of the SiC plate itself and having one or more holes in the SiC of fixed size in a central portion thereof.

As anticipated, in both cases mentioned above, the semiconductor plates comprise a central hole and are placed perpendicular to the high-intensity ionizing beam to allow it to pass through the central hole itself.

### Problem of the prior art

The state-of-the-art detectors do not have an optimal structure for detecting the tails of a high-intensity ionizing beam and the respective position. In fact, the presence of one or more "fixed" central holes in the semiconductor plate used for detecting the beam, although it does not interfere with the passage of the central portion of the beam thanks to this measure, presents considerable drawbacks.

In more detail, any displacements of the high-intensity ionizing beam cause the deterioration of the peripheral portion of the plate surrounding the central hole, as this peripheral portion is subject to irradiation of the portion of the high-intensity ionizing beam. In addition, the holes, having a fixed size during the manufacture of the sensors, do not allow an appropriate and variable sizing in relation to the operating conditions of the beam.

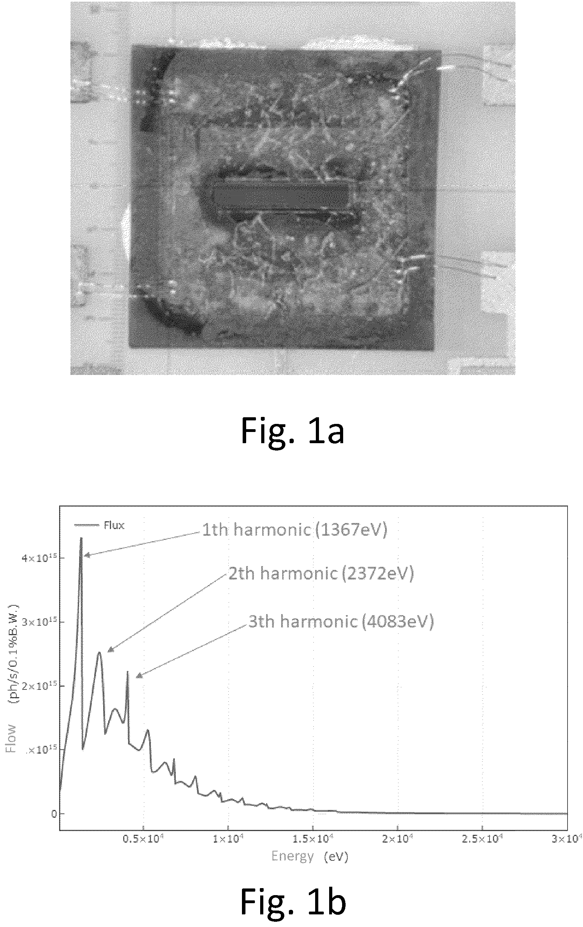

In the first case, the thermal drifts generated by the high-intensity ionizing beam in the portion of the irradiated plate may result in structural damage to the plate itself, the connected electrodes and the relative support, thus generating the need to replace the components of the device. As a result, the known devices require constant maintenance and a high frequency of replacement of the plates and possibly of the supports, with consequent increase in costs. By way of demonstration, Fig. 1a shows the deterioration of a sensor in SiC due to an accidental displacement of the high-intensity ionizing beam during alignment operations. In particular, in the aforementioned figure it can be seen how the metallizations above the semiconductor are strongly uneven and damaged.

In the second case, however, it is impossible to correctly measure the position of the ionizing beam and it is needed to replace the plate with one with a small hole size. In more detail, this oversizing may depend on the operating conditions of the high-intensity ionizing beam. This means that these devices can only be used for some operating configurations of the high-intensity ionizing beams.

A further disadvantage, specific for devices comprising diamond plates, relates to the possibility of using such devices only as photoresists, which therefore require high external electrical voltages to operate, as they are used to measure the different electrical resistance in the presence or absence of electrical charges induced by the ionizing beam. The electrical charges generated by the high-intensity ionizing beam, since they are subject to the high electrical voltages present between the metal plates superimposed on the diamond plate, further heat the aforementioned diamond plate by Joule effect. This further thermal rise may result in a deterioration of the device itself, and in particular of the metal plates deposited on the two faces of the single diamond plate.

### Summary of the invention

In this context, the technical task of the present invention is to provide a detecting apparatus for detecting the position of a high-intensity ionizing beam which overcomes the drawbacks of the prior art.

In particular, the object of the present invention is to realize a detecting apparatus for detecting the position of a high-intensity ionizing beam that allows to optimize the intercepting modality of the high-intensity ionizing beam according to the specific operating modes of the beam, reducing the damage to the apparatus and safeguarding the structure of the apparatus itself.

The technical task and the specified purposes are substantially achieved by a detecting apparatus comprising the technical features described in one or more of the appended claims.

The detecting apparatus of the present invention comprises at least two distinct plate-shaped sensors, each having a plate of semiconductor material, for example Silicon Carbide (SiC), formed by at least two layers with different concentrations of impurities, i.e. doping extents or levels, which are movable along at least one direction perpendicular to the direction of propagation of the ionizing beam and capable of detecting distinct portions of a high-intensity ionizing beam. This solution allows the aforementioned sensors to be positioned in such a way as to optimise the absorption capacity of only the tails of the beam, minimising the risk of their deterioration and, at the same time, allowing an optimisation of the detection of the beam itself through a filtering and selection mechanism of the energy components of the beam itself. **In** this way, damage to the sensors due to thermal drifts induced by the high-intensity ionizing beam is avoided. In greater detail, a first plate-shaped sensor and a second plate-shaped sensor are positioned on mobile supports opposite to each other with respect to the high-intensity ionizing beam, along a direction transverse to the beam propagation direction itself. Advantageously, the use of two or more plate-shaped sensors instead of a single plate makes it possible to better adapt the structure of the apparatus, in particular the relative distance between the two sensors, to the needs and structure of the high-intensity ionizing beam. In addition, the use of two or more sensors makes it possible to detect two or more significant portions of the high-intensity ionizing beam, so as to acquire not only the intensity of the beam, but also sufficient information to define the position thereof and detect any displacements. Finally, the use of at least two layers with different impurity concentrations in each semiconductor plate allows to optimize the monitored energy components of the ionizing beam.

In greater detail, the plate-shaped sensors are connected to movement members capable of moving the aforementioned sensors towards and/or away from the high-intensity ionizing beam. In this way, it is effectively possible to adjust and adapt the position of the plate-shaped sensors to the structure of the high-intensity ionizing beam to avoid burns and damage to the sensors themselves.

Advantageously, in the presence of an asymmetric high-intensity ionizing beam, the detecting apparatus according to the present invention therefore allows the structure of the apparatus itself to be adapted to effectively detect the portion of ionizing beam with greater intensity, in order to acquire the information necessary to evaluate its intensity, position and possible displacements.

In accordance with one embodiment, the plates of the plate-shaped sensors are arranged parallel to the high-intensity ionizing beam, with a detecting edge facing the aforesaid beam and capable of absorbing a respective portion thereof. In this way, even if burns or damage were to occur, these would only involve a peripheral portion of the sensor, i.e. the involved edge, and not the entire surface. Advantageously, in such conditions the sensor would still be operational and would not require replacements. Still advantageously, the solution described above allows to expose, even in case of incorrect displacements of the beam, a reduced beam/sensor interaction surface, so as to reduce the thermal load on the sensor and therefore the risk of damage to the same.

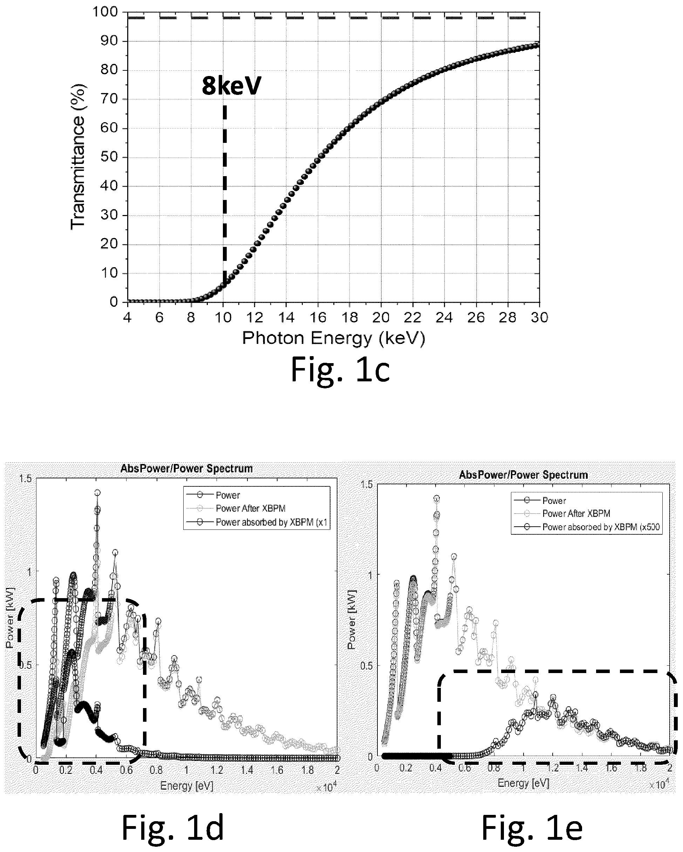

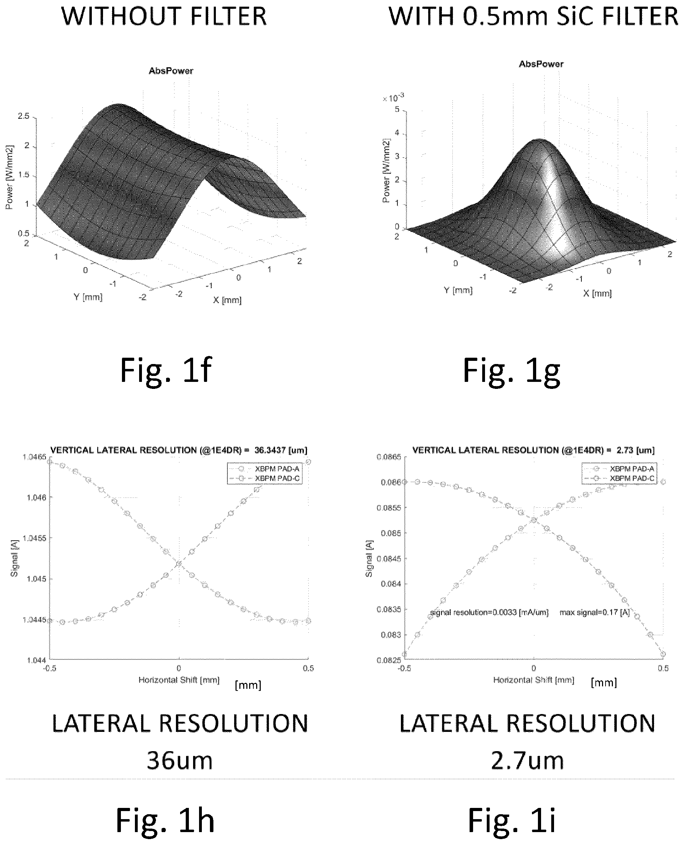

A further advantage of the present invention is the possibility of specifically arranging layers of impurities in the semiconductor plate, and in particular in SiC, in such a way that through the use of metal plates suitable for capturing the generated electrical charges, it is possible to achieve a discrimination of the energy components of the ionizing beam itself and therefore make filters integrated in the sensor itself. In this way, it is possible to improve the spatial sensitivity of the sensor by orders of magnitude (as shown in Figures 1f-1i), with the same geometric arrangement of the sensor itself. In fact, it should be noted that in high-intensity ionizing beams, for example X-ray beams, the different energy components have different spatial conformations. Therefore, by appropriately choosing, through the use of filters integrated in the sensor based on regions of appropriate level of impurities in the semiconductor itself, the most spatially defined energy components, i.e. with a smaller width at half height FWHM (Full Width at Half Maximum), it is possible to increase the overall spatial sensitivity of the sensor itself. By way of example, the effect of filters integrated in sensors of known type is shown in figures 1c-1i.

### BRIEF DESCRIPTION OF THE DRAWINGS

Further characteristics and advantages of the present invention will become clearer from the indicative, and therefore non-limiting, description of a preferred but not exclusive embodiment of a detecting apparatus for detecting the position of a high-intensity ionizing beam, as illustrated in the accompanying drawing tables in which:
- Figure 1a shows a device of the known art strongly degraded following exposure to a high-intensity ionizing beam off-axis with respect to the device itself;
- Figure 1b shows, by way of example, a graph representative of the spectral energy distribution of a high-intensity polychromal X-ray beam generated by a synchrotron source;
- Figure 1c shows, by way of example, a graph representative of the percentage of transmission of a high-intensity polychromal X-ray beam inside a known sensor in silicon carbide SiC having a thickness of 0.5 mm and acting as a high-pass filter, in which the only components of the beam to pass through the sensor correspond to the highest energy components, higher than 8keV;
- Figure 1d shows, by way of example, a graph representative of the absorption of a known sensor in SiC having a thickness of 0.01 mm without a filter integrated in silicon carbide;
- Figure 1e shows, by way of example, a representative graph of the absorption of the known sensor of Figure 1d comprising a 0.5 mm thick silicon carbide coating acting as an integrated filter, wherein the components of the beam contributing to the signal correspond to the highest energy components, higher than 8keV;
- Figure 1f shows, by way of example, a representative graph of the spatial absorption distribution of the known sensor of Figure 1d;
- Figure 1g shows, by way of example, a graph representative of the spatial absorption distribution of the known sensor of Figure 1e;
- Figure 1h shows, by way of example, a graph representative of the lateral resolution associated with the known sensor of Figure 1d;
- Figure 1i shows, by way of example, a graph representative of the lateral resolution associated with the known sensor of Figure 1e, in which an improvement by a factor 13.3 of the lateral resolution compared to the resolution shown in the graph of Figure 1h thanks to the use of the integrated filter is visible;
- Figure 2 shows a perspective view of an initial embodiment of a detecting apparatus according to the present invention;
- Figure 3a shows a perspective view of some elements of the detecting apparatus of Figure 2;
- Figure 3b shows a partial side view of the detecting apparatus of figure 3a;
- Figure 4 is an enlargement of a detail of Figure 3a;
- Figure 5 schematically shows a simplified side view of the detecting apparatus of Figure 2;
- Figure 6 shows a front view of a second embodiment of the detecting apparatus according to the present invention;
- Figure 7 schematically shows a simplified perspective view of the detecting apparatus of Figure 6;
- Figure 8 shows a top view of a practical embodiment of sensors of a detecting apparatus according to the present invention.

### DETAILED DESCRIPTION

With reference to the attached figures, 1 denotes a detecting apparatus for detecting a high-intensity ionizing beam A and for the relative monitoring of the position of the high-intensity ionizing beam A emitted along a beam propagation direction X-X.

It is to be noted that for the purposes of the present description, by high-intensity ionizing beam is meant a beam of X-rays, the thermal drifts of which represent a considerable problem for the detecting devices known in the state of the art. However, high-intensity ionizing beams composed of one of ions, subatomic particles, including neutrons, protons or positrons, gamma rays are also to be considered as included.

The detecting apparatus 1 comprises a first plate-shaped sensor 2, comprising a plate 8 extending between a first end 2a and a second end 2b, identifying a first orientation. The second end 2b of the plate 8 of the first plate-shaped sensor 2 is adapted to partially intercept the high-intensity ionizing beam A and to detect along a first direction D1-D1, transverse to the beam propagation direction X-X, a first portion of the high-intensity ionizing beam A.

Within the scope of the present invention, by plate is meant a substantially plane element, wherein a third dimension thereof is much smaller than the other two dimensions, for example equal to or less than 1/10 than the other two dimensions.

The detecting apparatus 1 further comprises at least a second plate-shaped sensor 3 comprising a respective plate 8 which also extends between a first end 3a and a second end 3b, identifying a second orientation. Similarly to the first plate-shaped sensor 2, the second end 3b of the plate 8 of the second plate-shaped sensor 3 is adapted to partially intercept the high-intensity ionizing beam A and to detect along the first direction D1-D1 a second portion of the high-intensity ionizing beam A, distinct from the first portion. It is to be noted that the first direction is opposite to the second direction, so that the second ends of the plates of the two plate-shaped sensors 2, 3 are facing towards the ionizing beam A.

According to the invention, the plate 8 of each plate-shaped sensor 2, 3, is made of semiconductor material, and preferably of Silicon Carbide (SiC). Still preferably, each plate 8 comprises at least two doped layers having impurity concentrations, i.e. doping extents or levels, different of at least one order of magnitude.

It should be noted that silicon carbide has numerous advantages in terms of cost, linearity, operation in the absence of externally applied electrical voltages (photovoltaic operation), speed of electrical response, signal-to-noise ratio, and electrical current uniformity compared to other semiconductor materials, for example diamond.

According to the invention, the first plate-shaped sensor 2 and the second plate-shaped sensor 3 are arranged along the first direction D1-D1 opposite to each other with respect to the high-intensity ionizing beam A. In other words, the first and the second plate-shaped sensor 2, 3 are spaced along the first direction D1-D1, transverse, and preferably orthogonal, to the beam propagation direction X-X, so that in use the high-intensity ionizing beam A is interposed between the two plate-shaped sensors 2, 3.

It should be noted that the detection of portions of the high-intensity ionizing beam A following the impact of the beam itself on the plate of the plate-shaped sensors generates a photoelectric effect inside the plate, detectable by means of a pair of electrodes, comprising a cathode and an anode.

According to a preferred aspect, the plate 8 of each plate-shaped sensor comprises a plurality of layers, each with different impurity concentrations. More in detail, each plate 8 comprises one or more doped layers of type, for example, n+, n-, p+. The mode of doping Silicon Carbide and the type of doped layers is known in the technical field and within the reach of a person skilled in the sector, therefore it will not be commented on.

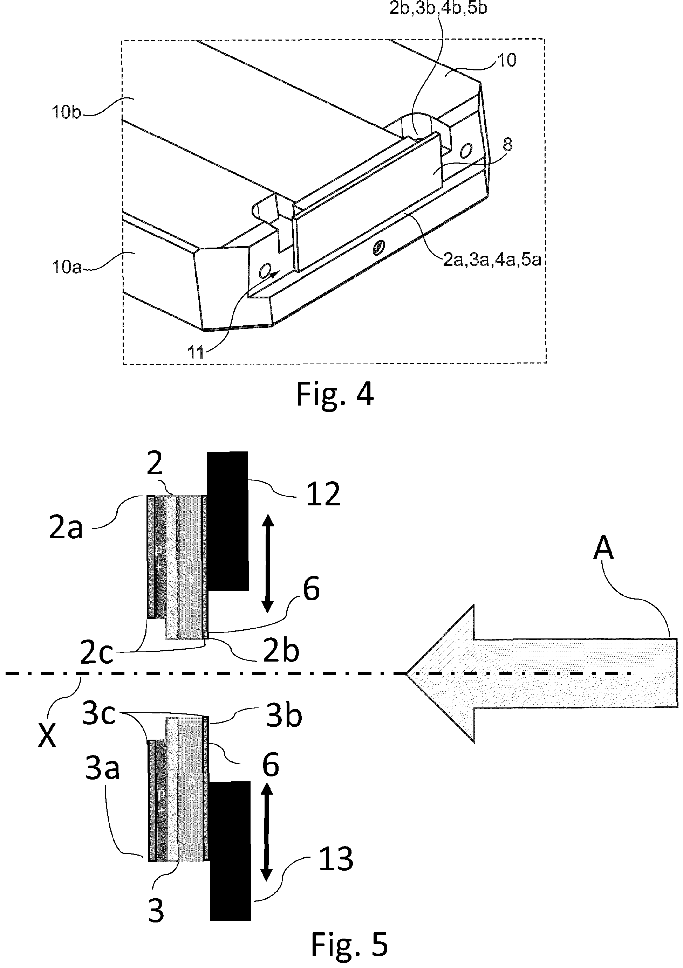

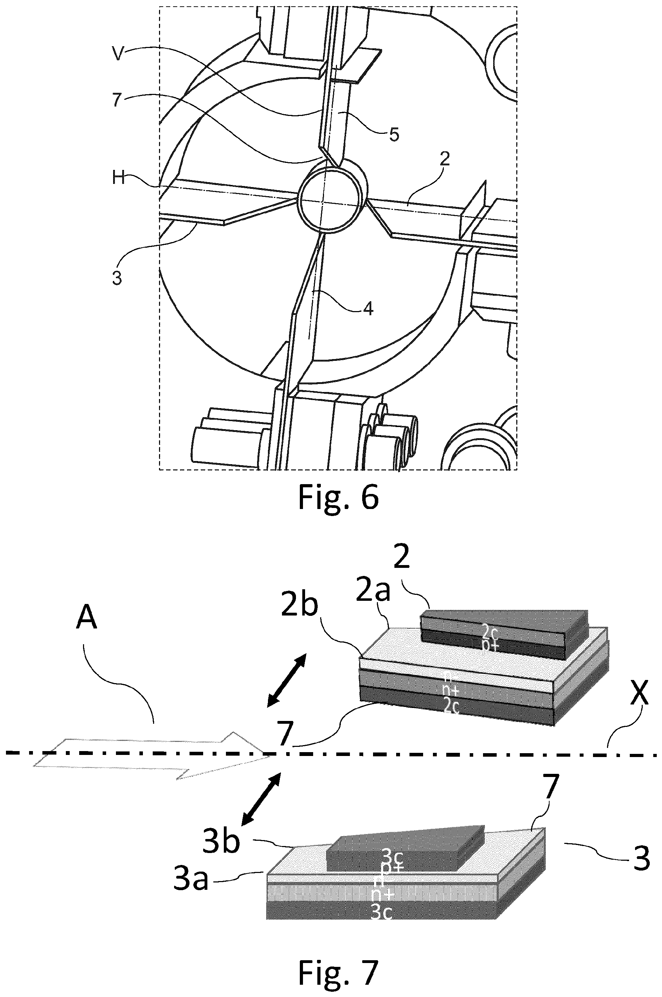

According to the embodiment of figures 5 and 7, each plate 8 comprises at least a first doped layer, preferably an n+ -type doped layer, having an impurity concentration higher than 5E17cm⁻³ (impurity atoms per cubic centimetre), and at least a second doped layer, preferably n- -type, having an impurity concentration lower than 5E16cm⁻³, at least partially overlapping the first doped layer, i.e. the n+ -layer. More in detail, the n+ -type doped layer is much closer to the high-intensity ionizing beam A than the n- -type doped layer, as described in further detail in the following of the present description.

It should be noted that the arrangement of the n+ and n- type doped layers allows to at least the n+ type doped layer, and optionally also the n- layer, to act as a filtering layer, i.e. adapted to filter the low-energy components of the high-intensity ionizing beam A, and to the n- type doped layer to act as an active layer, i.e. adapted to detect and convert with high efficiency the electrical charges generated in the plate 8, and specifically in the n- type doped layer, following an internal photoelectric effect being established, due to the impact with the tails of the ionizing beam, in an electrical signal, detectable by a measurement system.

Note that the n+ and n- layers can act as an anode and cathode for the plate-shaped sensor, so as to detect the displacement of electrons and therefore the current generated in the plate 8 in SiC.

Advantageously, the arrangement of the layers in the plate 8 allows to provide a filter effect integrated in the sensor itself capable of discriminating the energy components of the high-intensity ionizing beam A. In this way, it is possible to improve, even by orders of magnitude, the spatial sensitivity of the plate-shaped sensor.

Optionally, each plate 8 may further comprise a third doped layer, preferably of the p+ type, overlapping the n- type doped layer on an opposite side with respect to the n+ type doped layer, as shown in figures 5 and 7. In more detail, the third doped layer has different and opposite impurities compared to the first and second doped layers. The p+ type doped layer is adapted to efficiently detect and collect electric charges generated in the plate 8, and specifically in the n- type doped layer, generating a high built-in electric field active in the plate 8.

The n+ and p+ type doped layers can also act as an anode and cathode to detect the current generated internally to the plate 8.

Still optionally, each plate-shaped sensor 2, 3 may respectively comprise at least one metal plate 2c, 3c placed on one of the sides of the plate 8 of the plate-shaped sensor, adapted to detect the charges generated in the plate 8 by the high-intensity ionizing beam A and convey them towards a measurement system cooperating with at least one doped layer. Still optionally, each plate-shaped sensor 2, 3 comprises a pair of metal plates 2c, 3c placed on opposite sides of the plate 8. In both cases, each metal plate 2c, 3c, has a thickness less than the plate 8, for example equal to or less than 1/10 of the thickness of the plate 8.

According to one aspect, in each plate-shaped sensor 2, 3, the p+ -type doped layer may be completely or only partially overlapping the n- -type doped layer. In this way, the n+ -type doped layer has a filtering portion, adapted to perform the function of energy filter, having a length comprised between 0.1 and 5 mm.

According to the same aspect, also the at least one metal plate 2c, 3c, or the pair of metal plates, can be completely or only partially overlapping the plate 8. In both cases, the p+ -type doped layer and/or the at least one metal plate, or the pair of metal plates 2c, 3c are much closer to the first end 2a, 3a of the respective plate 8 than to the second end 2b, 3b. In this way, it is possible to optimize the filtering effect of the n+ - type doped layer when hit by the high-intensity ionizing beam A, as explained in more detail below of the present description.

The pair of metal plates 2c, 3c allows the current inside the plate 8 to be detected instead of the n+ or p+ or n- type doped layer combination.

With further detail, the pair of metal plates 2c, 3c, or alternatively the n+, p+ or n- - type doped layers, are configured to detect the current generated in the plate 8 in SiC as a function of the number of electron-hole pairs by grounding one of the anode and the cathode, i.e. one of the two layers, or one of the two metal plates. However, it should be noted that the use of n+, p+ or n- layers, used as an alternative to metal plates, advantageously allows to avoid the use of the metal plates which, if exposed to particularly intense ionizing beams, could degrade or delaminate from the plate-shaped sensor in semiconductor material.

It should be noted that the minimum number of plate-shaped sensors to allow the acquisition of information useful for detecting the position and detecting any displacements of the high-intensity ionizing beam A is equal to two, which must be arranged as described above to optimize the collection of information relating to the position and/or displacements of the beam.

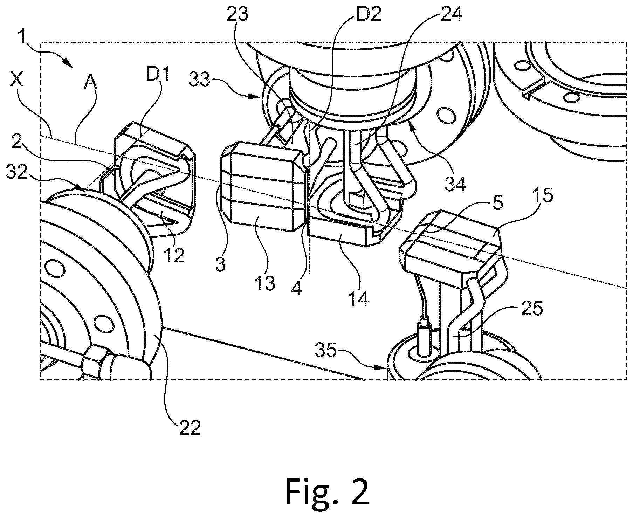

In accordance with the preferred embodiment of the invention, the detecting apparatus 1 comprises a plurality of plate-shaped sensors, and preferably four plate-shaped sensors 2, 3, 4, 5, as shown in figures 2 and 6. Each plate-shaped sensor 2-5 comprises a respective plate 8 made of semiconductor material, preferably of SiC and provided with the above-described doped layers, which extends between respective first ends 2a, 3a, 4a, 5a and second ends 2b, 3b, 4b, 5b, each identifying a respective orientation. In detail, each second end 2b, 3b, 4b, 5b faces the high-intensity ionizing beam A.

Advantageously, the use of four distinct plate-shaped sensors allows to acquire more accurate, precise and reliable information regarding the position of the high-intensity ionizing beam A, as measurements are made in four different positions, and therefore allowing to obtain information for example along two different directions orthogonal to the direction of the beam, as described in further detail in the following of the present description.

In the preferred embodiment (i.e. the one comprising four plate-shaped sensors), the second end 2b, 3b, 4b, 5b of the plate 8 respectively of the first, second, third and fourth plate-shaped sensors 2, 3, 4, 5 is adapted to detect a respective first, second, third and fourth portion of the high-intensity ionizing beam A. More in detail, the first and second plate-shaped sensors 2, 3 detect the respective first and second portions of the ionizing beam along the first direction D1-D1, while the third and fourth plate-shaped sensors 4, 5 detect the respective third and fourth portions of the beam along a second direction D2-D2, transverse to the beam propagation direction X-X and the first direction D1-D1. According to the preferred aspect, the first and second directions D1-D1 and D2-D2 are orthogonal to each other and are preferably orthogonal to the beam propagation direction X-X. The four beam portions are all distinct from each other and correspond to different portions of the tails of the high-intensity ionizing beam A.

In this way, the third and fourth plate-shaped sensors 4, 5 are transversal, and preferably orthogonal, to the first and second plate-shaped sensors 2, 3.

With further detail, at least the first and second plate-shaped sensors 2, 3, and preferably the four plate-shaped sensors 2, 3, 4, 5, are arranged circumferentially around the high-intensity ionizing beam A to surround said high-intensity ionizing beam A, as shown in figures 2 and 6.

It should therefore be noted that in the preferred embodiment, the first and second plate-shaped sensors 2, 3 are arranged along the first direction D1-D1 with respective mutually opposite orientations, and similarly the third and fourth plate-shaped sensors 4, 5 are arranged along the second direction D2-D2 with respective opposite orientations.

In accordance with one embodiment, the first and second plate-shaped sensors 2, 3, and optionally all four plate-shaped sensors, lie on an acquisition plane transverse, and preferably orthogonal, to the beam propagation direction X-X.

In greater detail, as illustrated in the embodiment illustrated in figure 6, at least the first and second plate-shaped sensors 2, 3, and preferably the four plate-shaped sensors 2-5, have a substantially coincident position along the beam propagation direction X-X, so as to wrap the same axial segment of the high-intensity ionizing beam A along the beam propagation direction X-X.

Optionally, the first and second plate-shaped sensors 2,3, and preferably the four plate-shaped sensors 2-5, lie internally to a three-dimensional geometric figure representable, in first approximation, with a torus, or toroid, defined around the beam propagation direction X-X.

In accordance with an alternative embodiment, illustrated in figure 2, at least the first and second plate-shaped sensors 2,3, and preferably the four plate-shaped sensors 2-5, are spaced apart along the beam propagation direction X-X.

More in detail, as shown in figure 5, at least the first and second plate-shaped sensors 2, 3 lie internally to a three-dimensional geometric figure representable, in first approximation, with a helicoid or spiral, defined around the beam propagation direction X-X and having a constant or variable pitch. In the preferred case with four sensors, illustrated in figure 6, all four plate-shaped sensors 2-5 lie internally to said helicoid.

It should be noted that the arrangements of the plate-shaped sensors described above allow to accurately detect any displacements of the ionizing beam along a vertical direction Y-Y and/or along a horizontal direction H-H, which are transverse, and preferably perpendicular, to the beam propagation direction X-X. In other words, it is possible to reconstruct the position and/or displacements of the high-intensity ionizing beam A at least along a plane substantially perpendicular to the beam propagation direction X-X, by coupling and combining together the information acquired by the four plate-shaped sensors 2, 3, 4, 5. Note that in the preferred embodiment the directions D1-D1 and D2-D2 are coincident with the vertical directions Y-Y and horizontal directions H-H.

In the following of the present description, for ease of reading, where the embodiment comprising at least a first and a second plate-shaped sensor is described, the technical characteristics set forth are to be understood as being present also for the embodiment having four plate-shaped sensors, unless otherwise specified. In fact, it should be noted that a person skilled in the sector is able to easily adapt the respective teachings of the embodiment having at least two plate-shaped sensors also to the embodiment including four plate-shaped sensors.

According to the invention, the first plate-shaped sensor 2 is operationally independent of the second plate-shaped sensor 3. Preferably, each plate-shaped sensor 2-5 is operationally independent of the other plate-shaped sensors of the detecting apparatus 1.

According to one aspect, the plate 8 of each plate-shaped sensor 2-5 has a rectangular-shaped section. Still according to the same preferred aspect, the plate 8 has a length comprised between 5 and 40 mm, preferably between 15 and 30 mm, a width comprised between 5 and 25 mm, preferably between 10 and 20 mm, and a thickness comprised between 0.05 and 5 mm, preferably comprised between 0.1 and 0.4 mm. According to alternative aspects not illustrated, the plate 8 of each plate-shaped sensor may have a section of any shape, for example circular or polygonal.

According to one aspect, the first and second plate-shaped sensors 2, 3 are movable at least along the first direction D1-D1. In the preferred case, the third and fourth plate-shaped sensors 4, 5 are also movable at least along the direction D2-D2.

According to an embodiment of the invention, the detecting apparatus 1 comprises at least a first support device 32 comprising a first support element 12 associated with the first plate-shaped sensor 2, and a second support device 33 comprising a second support element 13 associated with the second plate-shaped sensor 3.

It should be noted that in the preferred embodiment, the present detecting apparatus 1 comprises an independent support device 32, 33, 34, 35 for each plate-shaped sensor 2-5, each support device comprising a respective support element 12-15 associated with the respective plate-shaped sensor 2-5.

Each plate-shaped sensor 2, 3, 4, 5 is at least partly overlapping the respective support element 12, 13, 14, 15 in such a way that the respective second end 2b, 3b, 4b, 5b of each plate-shaped sensor protrudes with respect to the support element in the direction of the high-intensity ionizing beam A.

According to one embodiment, each plate-shaped sensor 2, 3, 4, 5 of the detecting apparatus 1 is placed in signal communication with a processing unit configured to receive data from said plate-shaped sensor and to process the received data.

According to one aspect, each support device 32-35 comprises at least one thermocouple coupled to the respective support element 12-15 and configured to detect the temperature variation of the support element, and consequently of the plate 8 of the respective plate-shaped sensor, following interception of the high-intensity ionizing beam A.

According to a further aspect, shown in figure 2b, each support device 32-35 comprises cooling means 9 associated with the respective support element 12-15. The cooling means 9 comprise, for example, a duct in fluid communication with a tank, not illustrated, containing cooling liquids, preferably water.

In accordance with the embodiment of the invention shown in figures 1-6, the second end 2b-5b of each plate-shaped sensor 2-5 protrudes from the respective support element 12-15 towards the high-intensity ionizing beam A by a length comprised between 0.1 and 2 mm, preferably between 0.2 and 1 mm. Advantageously, this allows to effectively intercept the tails of the high-intensity ionizing beam A, avoiding the very high-intensity central portion that would burn and otherwise damage the plate-shaped sensor.

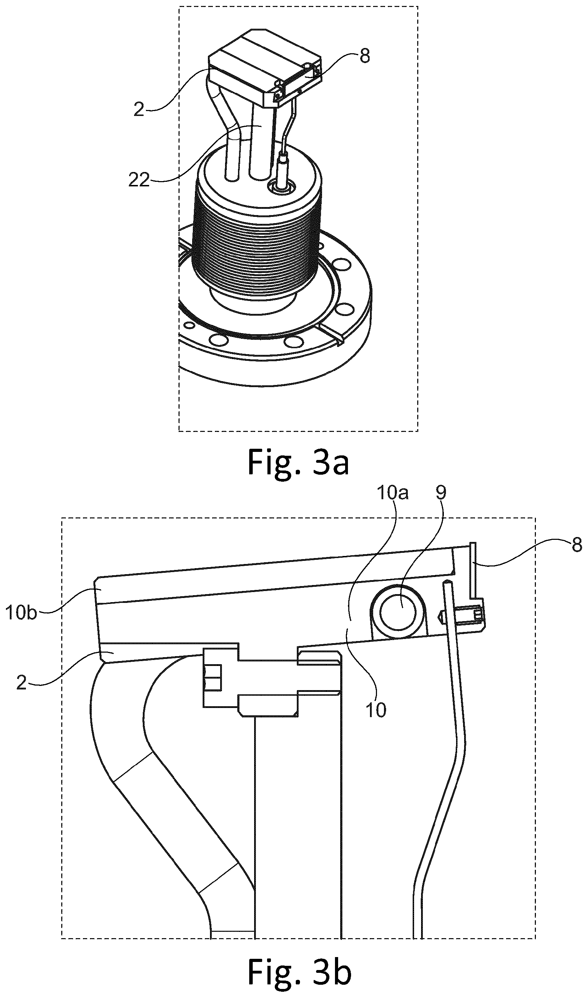

Still according to the embodiment of figures 2-5, and with particular reference to figures 3a-4, each support element 12-15 comprises a respective main body 10 having a seat 11 in which the respective plate-shaped sensor 2-5 is received.

Preferably, each plate-shaped sensor 2-5 is retained in the respective seat 11 of the respective support element 12-15 by retaining means, not illustrated. Optionally, the retaining means comprise, for example, projections placed on opposite sides of the plate-shaped sensor and adapted to block any relative movements between the plate-shaped sensor 2-5 and the main body 10 of the respective support element 12-15. Still optionally, the retaining means at least partly take the form of threaded elements adapted to cooperate with threaded holes obtained in the main body 10.

Still preferably, the plate-shaped sensor 2-5 extends transversely to the main body 10 of the respective support element 12-15.

According to the preferred aspect of the embodiment of figures 2-5, each plate-shaped sensor 2, 3, 4, 5 comprises at least one detecting face 6 adapted to detect, at the respective second end 2b, 3b, 4b, 5b, the respective high-intensity ionizing beam portion A. Preferably, the detecting face 6 extends transversely, and preferably perpendicularly, to the beam propagation direction X-X.

According to the same aspect, shown in figure 5, the n+ and n- type doped layers, and possibly the p+ type doped layer, of the plate 8 of each plate-shaped sensor 2-5 are arranged transversely to the beam propagation direction X-X in such a way as to define an acquisition direction starting from the n+ type doped layer to the n- type doped layer or, alternatively, to the p+ type doped layer. The high-intensity ionizing beam A propagates along the beam propagation direction X-X with a given propagation direction. According to the present aspect, the direction of acquisition of the plate 8 is coincident with the beam propagation direction. In this way, in use, the high-intensity ionizing beam A hits the n+ -type doped layer before the further n- and p+ -type doped layers, so that the n+ -type doped layer can act as a filtering layer. Optionally, the p+ - type doped layer only partially covers the n- -type doped layer, and away from the second end of the plate 8, so as to optimize the filtering effect of the n+ -type doped layer.

According to the embodiment of figures 2-5, the main body 10 of each support element 12-15 comprises a first portion 10a made of metallic material, preferably copper.

As is known in the field, the use of copper as a material for the support element allows to improve the cooling by an order of magnitude compared to other known materials, including alumina, thanks to the high thermal conductivity.

It should be noted that the realization of the SiC plate 8 does not require electrical insulation with respect to the copper support element, in light of the physical properties of silicon carbide and its doping profile. This allows the SiC plate to be placed in direct contact with the copper, improving the cooling process.

Optionally, the main body 10 comprises a second portion 10b at least partly overlapping the first portion 10a and made of a different metallic material, preferably tungsten.

It should be noted that tungsten acts as a block for the ionizing radiation of the high-intensity ionizing beam A and, therefore, represents a protection for the remaining structure of the support element. This feature, in combination with the protruding position of the plate-shaped sensor 2-5 with respect to the respective support element 12-15, and with the filtering action of the n+ -type doped layer of the plate 8, effectively allows to optimize the structure of the detecting apparatus 1, increase the sensitivity of the plate-shaped sensor and reduce any damage effects due to the thermal drifts of the high-intensity ionizing beam A.

According to an aspect of the embodiment of figures 1-6, the main body 10 of each support element 12-15 is at least partly inclined with respect to the beam propagation direction X-X by an angle comprised between 10° and 30°, preferably of about 20°. This advantageously allows to further optimize the interception and detection of the high-intensity ionizing beam A by the plate-shaped sensor. Note that the plate 8 of each plate-shaped sensor 2-5 can be positioned both perpendicularly and obliquely, i.e. inclined, with respect to the beam propagation direction X-X.

In accordance with the embodiment illustrated in Figures 6 and 7, different from the embodiment illustrated in Figures 2-5, the second end 2b-3b of the plate 8 of each plate-shaped sensor 2-5 protrudes from the respective support element 12-15 by a length comprised between 5 and 40 mm, preferably between 10 and 30 mm.

According to a preferred aspect of the embodiment in figure 7, the n+ - and n- - type doped layers, and possibly the p+ -type doped layer, are parallel to the beam propagation direction X-X and are arranged overlapping each other along a direction transverse to the beam propagation direction X-X. More in detail, as described for the alternative embodiment, the p+ -type doped layer only partially covers the n- -type doped layer, in such a way as to define a filtering portion of the n+ -type doped layer, possibly in combination with the n- layer, at the portion of the n+ and n- -type doped layer not overlapping the p+ -type doped layer. This filtering portion preferably has a length comprised between 0.1 and 10 mm.

Again according to the aforementioned embodiment, the plate 8 of each plate-shaped sensor 2-5 comprises at the respective second end 2b-3b at least one detecting edge 7 adapted to detect the respective portion of the high-intensity ionizing beam A. Preferably, the plate 8 of each plate-shaped sensor 2-5 has two parallel and opposite faces separated by the respective thickness of the plate, the detecting edge 7 is defined along the thickness of the plate 8 between the two parallel faces.

According to the embodiment of figures 6 and 7, the first direction D1-D1, and preferably also the second direction D2-D2, are orthogonal to the beam propagation direction X-X and the detecting edge 7 extends along a direction inclined to the beam propagation direction X-X by an angle comprised between 0° and 85°, preferably by around 45°. For the purposes of the present description, the term around is to be understood as a tolerance of + or - 10°. Note that the inclination of the detecting edge 7 is to be understood as calculated with respect to the direction of propagation of the high-intensity ionizing beam A.

It should be noted that in the embodiment of figures 6 and 7, the portion of the plate-shaped sensor adapted to intercept the high-intensity ionizing beam A is the edge of the plate-shaped sensor itself, so as to reduce exposure to the ionizing radiation to a limited peripheral portion of the plate 8 of the plate-shaped sensor. In this way, if the ionizing radiation were to have a higher intensity than expected, any burns and damage to the sensor would affect only the detecting edge and not an entire face of the plate-shaped sensor plate 8, contrary to the prior art.

It should also be noted that the inclination of the detecting edge 7 allows to obtain a reduced heating of the aforementioned detecting edge 7, thanks to the greater exposure area, so as to avoid the concentration of thermal effects only in the initial portion of the edge.

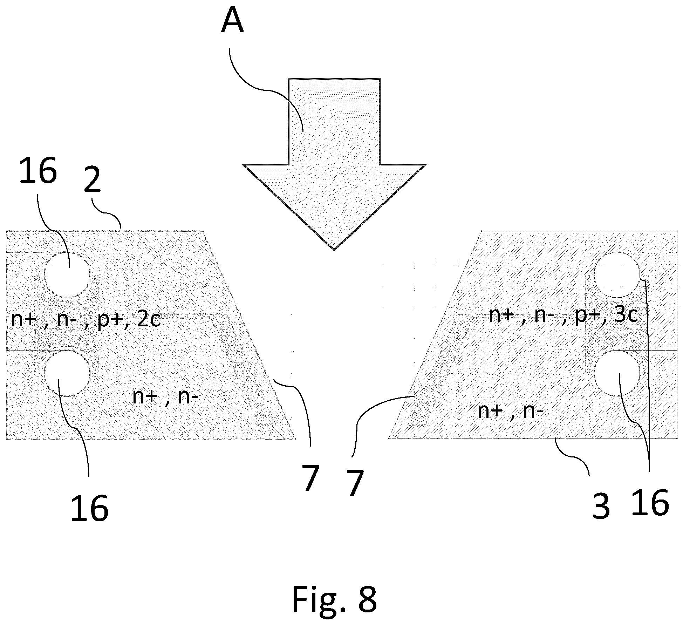

An example of a practical embodiment of a pair of plate-shaped sensors 2, 3 is illustrated in figure 8. Note that the p+ doped layer and the metal plates are present only in the central portion of the plate-shaped sensor, while the n+ and n- filtering layer is present at the detecting edge 7.

As illustrated in figure 8, it should be noted that each plate-shaped sensor can comprise one or more centring holes 16 adapted to allow the alignment of the sensor with respect to the respective support and favour the mechanical and/or electrical blocking thereof with respect to the support.

This allows to avoid the total replacement of the plate-shaped sensor, thus reducing the maintenance costs of the detecting apparatus 1.

It should also be noted that this configuration of the detecting apparatus 1 makes it possible to safeguard the support devices, and in particular the support elements, which, in the presence of incorrect measurement and damage to part of the plate-shaped sensor, are not subject to the same destructive effect as they are well spaced from the portion involved.

According to one aspect, each support element 12-15 is movable towards and/or away from the high-intensity ionizing beam A. More in detail, the first and second support elements 12, 13 are movable at least along the first direction D1-D1, while the third and fourth support elements 14, 15 are movable at least along the second direction D2-D2.

Optionally, in the embodiment illustrated in figures 6 and 7, the first and second support elements 12, 13 are further movable along a direction transverse to the direction D1-D1, for example the direction D2-D2, and the third and fourth support elements 14, 15 are further movable along a direction transverse to the direction D2-D2, for example the direction D1-D1. In this way it is possible to adjust and centre the position of the plate-shaped sensors 2-5 with respect to the high-intensity ionizing beam A.

In accordance with an embodiment of the invention, the first support device 32 comprises first movement members 22 associated with the first plate-shaped sensor 2, and preferably with the first support element 12, and the second support device 33 comprises second movement members 23, associated with the second plate-shaped sensor 3, and preferably with the second support element 13. In the preferred case, the third and fourth support devices 34, 35 comprise respective third and fourth movement members 24, 25 respectively associated with the third and fourth plate-shaped sensors 4, 5 and, in more detail, with the respective support elements 14, 15.

Preferably, the first, second, third and fourth movement members 22-25 are adapted to move the respective plate-shaped sensor 2-5, and in particular the respective support elements, towards the high-intensity ionizing beam A and/or away from the high-intensity ionizing beam A.

According to one aspect, the first movement members 22 are independent of the second movement members 23, and in the preferred case, all the movement members 22-25 are independent of each other.

According to a further aspect, the movement members 22-25 are in signal communication with the processing unit and adapted to receive data therefrom to move the respective plate-shaped sensors 2-5 as a function of said data.

It should therefore be noted that the detecting apparatus 1 of the present invention allows the position of the plate-shaped sensors 2-5 to be adapted as a function of the non-uniformity of the high-intensity ionizing beam A. Advantageously, it is therefore possible to adjust and optimize the detection of the high-intensity ionizing beam even for asymmetric beams, effectively adapting the position of the plate-shaped sensors in the region of the high-intensity ionizing beam where it is the most intense.

A further object of the present invention is a system for detecting the position of a high-intensity ionizing beam A.

The system of the present invention comprises an emitter, not illustrated, adapted to emit a high-intensity ionizing beam A along a beam propagation direction X-X.

The system further comprises a detecting apparatus 1 according to the present description adapted to detect the intensity of the emitted beam, the position and any displacements of the high-intensity ionizing beam A.

Preferably, the system comprises one or more measurement systems connected to one or more plate-shaped sensors and configured to receive the electrical signal relating to the charge or current generated in the plate 8 of each plate-shaped sensor by the n- - type doped layer or the pair of metal plates 2c, 3c.

Preferably, the system further comprises a processing unit, not illustrated, placed in signal communication with each plate-shaped sensor 2-5 of the detecting apparatus 1 for receiving data therefrom. Still preferably, the processing unit is further connected to one or more of the movement members and is configured to transmit data to said movement members to activate the movement of the plate-shaped sensors 2-5, in response to alterations of the high-intensity ionizing beam A.

According to one aspect, the processing unit is adapted to individually control at least the first and second movement members 22, 23 and preferably also the third and fourth movement members 24, 25. In this way, in the presence of an asymmetrical high-intensity ionizing beam A, it is possible to adjust the distance of the plate-shaped sensors from the high-intensity ionizing beam A, adapting it to specific needs.

Alternatively, the processing unit is adapted to control a pair of movement members associated with respective plate-shaped sensors parallel to each other. In this way, the distance between the plate-shaped sensors can be adjusted symmetrically.

It should be noted that the present system and the detecting apparatus allow to intercept the tails, i.e. the peripheral portions, of the high-intensity ionizing beam A, avoiding the central part having too high intensity to allow a measurement and reducing the thermal loads to which the sensors are subjected. In addition, the different embodiments of the detecting apparatus 1 provide a solution adaptable to the specific need in order to further reduce the thermal loads and the maintenance necessary for plate-shaped sensors.

Compared to the known solutions, the replacement frequency of plate-shaped sensors is lower and there is a more efficient and accurate detection and measurement of the position of the ionizing beam.

## Claims

1. Detecting apparatus (1) for detecting the position of a high-intensity ionizing beam (A) emitted along a beam propagation direction (X-X), comprising:
- a first plate-shaped sensor (2) comprising a plate (8) of semiconductor material extending between a first end (2a) and a second end (2b) along a first direction (D1-D1) transverse to the beam propagation direction (X-X), the second end (2b) being configured to partially intercept a high-intensity ionizing beam (A) and detect along the first direction (D1-D1) a first portion of the high-intensity ionizing beam (A);
- at least a second plate-shaped sensor (3), operatively independent on the first plate-shaped sensor (2) and comprising a plate (8) of semiconductor material extending between a first end (3a) and a second end (3b) along the first direction (D1-D1), the second end (3b) of the second plate-shaped sensor (3) being configured to partially intercept the high-intensity ionizing beam (A) and detect along the first direction (D1-D1) a second portion of the high-intensity ionizing beam (A) distinct from the first portion,
wherein said first and second plate-shaped sensors (2, 3) are arranged along the first direction (D1-D1) and opposite to each other with respect to the high-intensity ionizing beam (A), the first and second plate-shaped sensors (2, 3) being movable at least along the first direction (D1-D1),
and wherein the plate (8) of each plate-shaped sensor (2, 3) is made of silicon carbide and comprises a plurality of layers comprising at least:
- first doped layer having an impurity concentration greater than 5E17cm-3, adapted to filter low-energy components of the high-intensity ionizing beam (A);
- a second doped layer having an impurity concentration lower than 5E16cm-3, at least partially overlapping the first doped layer, adapted to at least detect and convert electrical charges generated by the high-intensity ionizing beam (A) in the plate (8) into an electrical signal,
- a third doped layer, having different impurities with respect to the first and second doped layers, at least partially overlapping the second doped layer, on an opposite side with respect to the first doped layer, and adapted to enhance the collection of electrical charges generated in the plate (8).

2. Detecting apparatus (1) according to claim 1, comprising a pair of metal plates arranged on opposite sides of the plate (8) and configured to convey electric charges generated by the high-intensity ionizing beam (A) in the plate (8) to a measurement system.

3. Detecting apparatus (1) according to claim 1 or 2, comprising at least a first support device (32) comprising a first support element (12) and a second support device (33) comprising a second support element (13), the first and second support elements (12, 13) being respectively associated with the first and second plate-shaped sensors (2, 3), each plate-shaped sensor (2, 3) being at least in part overlapping the respective support element (12, 13), the second end (2b, 3b) of each plate-shaped sensor (2, 3) being facing the high-intensity ionizing beam (A) and protruding with respect to the respective support element (12, 13) in the direction of the high-intensity ionizing beam (A).

4. Detecting apparatus (1) according to claim 3, wherein each support element (12, 13) is configured to move towards the high-intensity ionizing beam (A) and/or away from the high-intensity ionizing beam (A).

5. Detecting apparatus (1) according to any one of claims 1 to 4, comprising a third plate-shaped sensor (4) and a fourth plate-shaped sensor (5) respectively configured to detect a third and a fourth portion of the high-intensity ionizing beam (A) along a second direction (D2-D2) transverse to the beam propagation direction (X-X) and the first direction (D1-D1), the third and the fourth portion being distinct from each other and distinct from the first and second portions, the four plate-shaped sensors being arranged circumferentially around the high-intensity ionizing beam (A).

6. Detecting apparatus (1) according to claim 5, wherein:
the third plate-shaped sensor (4) and the fourth plate-shaped sensor (5) are arranged along the second direction (D2-D2) opposite to the high-intensity ionizing beam (A),
the third and fourth plate-shaped sensors (4, 5) being arranged transversely to the first and second plate-shaped sensors (2, 3).

7. Detecting apparatus (1) according to any one of claims 1 to 6, wherein the plate (8) of each plate-shaped sensor (2, 3) comprises at least one detecting face (6) configured to detect at the respective second end (2b, 3b) the respective high-intensity ionizing beam portion (A), the detecting face (6) extending transversely to the beam propagation direction (X-X).

8. Detecting apparatus (1) according to any one of claims 1 to 7, wherein the plate (8) of each plate-shaped sensor (2, 3) comprises at least one detecting edge (7) at the second end (2b, 3b) and configured to detect the respective portion of the high-intensity ionizing beam (A), the first direction (D1-D1) being orthogonal to the beam propagation direction (X-X), the detecting edge (7) extending along a direction inclined with respect to the beam propagation direction (X-X) by an angle comprised between 0° and 85°, preferably of about 45°.

9. System for detecting the position of a high-intensity ionizing beam (A), comprising:
- an emitter adapted to emit a high-intensity ionizing beam (A) along a beam propagation direction (X-X), and
- a detecting apparatus (1) according to any one of the preceding claims.

10. System according to claim 9, comprising a processing unit placed in signal communication with at least the first and second plate-shaped sensors (2, 3) and configured to receive data from the first and second plate-shaped sensors (2, 3).
